# EUROPEAN PATENT SPECIFICATION

(11) **EP 3 507 084 B1**
(45) Date of publication and mention of the grant of the patent: **20.03.2024**
(21) Application number: 17777648.1
(22) Date of filing: 31.08.2017
(51) Int. Cl.: B29C 64/393, B33Y 10/00, B33Y 50/02, B29C 64/118

(54) **3D PRINTER FOR CURVILINEAR DEPOSITION**
3D-DRUCKER FÜR GEKRÜMMTE ABSCHEIDUNG
IMPRIMANTE 3D POUR DÉPÔT CURVILIGNE

(30) Priority: 31.08.2016 IT 201600088654
(43) Date of publication of application: 10.07.2019
(73) Proprietor: Thinking Additive Limited, London N1 7GU (GB)
(72) Inventor: CAVALLARO, Marco, 95014 Giarre (CT) (IT); CHORBIKJ, Marko, 22074 Lomazzo (CO) (IT)
(74) Representative: Praxi Intellectual Property Milano
(86) International application number: PCT/IB2017/055242
(87) International publication number: WO 2018/042365

(56) References cited:
- DE-A1-102008 027 315
- US-A- 5 121 329
- US-B2- 6 934 600
- Prabhjot Singh ET AL: "Design of a customized multi-directional layered deposition system based on part geometry", Proceedings of the 14th Solid Freeform Fabrication Symposium, 1 January 2003 (2003-01-01), pages 266-278, XP055257319, Austin, TX Retrieved from the Internet: URL:http://sffsymposium.engr.utexas.edu/Ma nuscripts/2003/2003-25-Singh.pdf [retrieved on 2016-03-10]
- ZHENZHEN QUAN ET AL: "Additive manufacturing of multi-directional preforms for composites: opportunities and challenges", MATERIALS TODAY, 1 May 2015 (2015-05-01), pages 1-10, XP055210471, ISSN: 1369-7021, DOI: 10.1016/j.mattod.2015.05.001

## Description

### TECHNICAL FIELD

The present invention relates to a 3D printer, i.e. an apparatus to manufacture tridimensional objects through additive production starting from a virtual 3D model of the product to be manufactured.

The present invention relate also to a method for manufacturing tridimensional objects through additive production starting from a virtual 3D model of the product to be manufactured.

In particular, the word 3D printer refers to an apparatus able to manufacture tridimensional products through layer by layer deposition of a material.

The material of the layers can be, for example, of the plastic kind to be discharged, after heating or melting, as a filament by a printing head having an extrusion nozzle movable with respect to a platform where the material is deposited. Alternatively, the material may have a thick consistency without the need to be preliminarily heated.

Such technology related to 3D printing is defined 'additive', or 'layer production', as an alternative to 'subtractive' production methods wherein the product is manufactured by removal of material.

As previously noted, the additive technology requires as an initial point an information about the geometry of the object to be manufactured through layer-by-layer deposition. Such an information may be directly generated in digital form without a physical sample or can be generated by acquisition and subsequent elaboration of relevant data from a physical sample of the product.

According to the prior art, such an information about the geometry of the object or virtual 3D model as previously mentioned, is elaborated such as to split the object in a plurality of superimposed planar layers and to drive the printing head to discharge the material to progressively create the object by deposition of a layer of the other. After completion of one layer, the printing head is configured to stop discharging the material until the next correct position to start the following layer. According to the prior art, the discharge of material is not only interrupted at the end of each layer but also, e.g. when the trajectory changes between discharge of the material for the object and discharge of the support material.

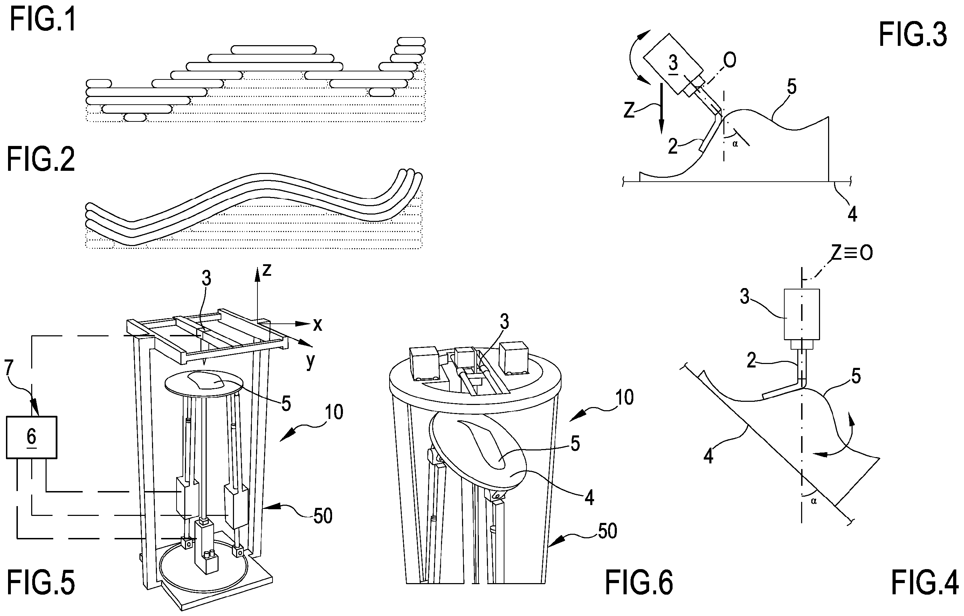

Figure 1 shows an example of a product manufactured according to the prior art where it is clear the plurality of interruptions needed during discharging.

To complete a single planar layer the printing head is movable with respect to the material deposit platform. In particular, the discharge head is movable in a plane that usually corresponds to a X-Y plane orthogonal to the Z axis defined by gravity. Such a planar motion allows the printing head to complete the realization of each single layer and may be accomplished by moving only the nozzle when the platform is still, by a coordinated motion of both the printing head and the platform and by moving only the platform when the printing head is still.

During the manufacturing of a layer it is necessary to keep the distance between the printing head and the deposition platform constant and controlled on the basis of process and design parameters, e.g. layer thickness and/or filament diameter, etc. Indeed a greater or lower distance could not result in the deposition of the filament in the desired position, thus causing the manufacturing of a low quality product, i.e. not in accordance with the initial objective.

Therefore, after completion of a single planar layer it is necessary to provide a motion along the above-defined z-axis of the printing head with respect to the platform to restore the correct distance between the nozzle and the deposition plane of the material, in this case the layer completed in the previous cycle. Such a motion can be obtained by rising the discharging nozzle or by lowering the deposition plane of the filament.

Patent US5121329 describes an example of the above-mentioned technology.

The adhesion between layers and between the portions of the material within a layer is ensured by the features of material itself, which provides a fast solidification. The possibility to obtain cut out or cantilevered portions is ensured by the deposition of material suitable to build, by means of the same layer-by-layer technique, a support on which product layers are deposited. The support material can be of a different nature than that of the product material and for such a purpose the printing head may be optionally provided by a second port to discharge a support material that can be easily removed.

The support material can as well be the same one used to build the product. In such a case the support is printed in such a way to be easily removed. In both cases, the support material is deposited along the same layer on which the product material is deposited and therefore, during the discharging of the layer, the head, if the material changes, shall stop the discharge of the product material to leave a spot and allow the local deposition of the support material.

Such a necessity increases by far the manufacturing time because there are many interruptions due to the deposition of both the support material and the support material. A problem of such technology, besides the time inefficiency due to interruptions of deposition mentioned above, is that the finished product is by nature a multilayered product, built by superimposed planar layers, and therefore is highly anisotropic with an intrinsic tendency to delamination or, else, to penetration of impurities in the product layers.

Where the product to be built has a curved profile in space, the above disadvantage worsens. Indeed, a curved profile obtained by superposition of planar layers shall have a stepped external profile and a section of the object having interrupted material layers, which favors delamination as shown e.g. in figure 1. Furthermore, the profile of the finished product will show a stepped profile that will not perfectly match the desired curved path, regardless the low thickness of the layers.

Where objects are defined by curved geometries having a low thickness to height ratio, the layer interruptions and the number of layers to build render the method time and cost inefficient besides the structure being fragmented and weak as discussed above.

Figure 1 shows such a disadvantage of the prior art where, to build a product having a thickness three times the thickness of the deposited layer, the printing head is forced to many interruptions to discharge in a discontinuous way the material on a layer and to displace to the level for the next layer.

Recently the problem about the presence of the support on which the material is deposited has been considered. In order to avoid the presence of such a support or supporting form, which is not part of the finished product, US2016067740 teaches to provide the printer with a reconfigurable material deposit platform able to rotate only when strictly necessary so as to discharge the material always in vertical alignment with the material discharged in the previous cycle.

In such a way, also cantilevered portions, which in case of a horizontal platform would have been discharged after the deposition of the support material, are now supported directly by the product material of the previous layer.

However, the finished product built according to US2016067740, albeit the building method did not require supports or supporting forms on the platform, is anyways manufactured by superimposed planar layers and therefore suffers a high anisotropy.

Starting from such a known technique, a current challenge is to build a product according to figure 2.

A known attempt provides a printing head capable of both translating with respect to the support platform and rotating.

Therefore, according to such a version where the head has more degrees of freedom, the discharge of a filament layer is not performed with the Z-axis of the nozzle kept still but, instead, the nozzle is free to move also along such an axis during the discharge to follow the curved path of the support or supporting form placed on the platform. Such a technology enables therefore to build products as superimposition of layers where the layers are not horizontal and follow the curved profile of the product. Figures 10 and 12 of prior art patent US5121329 show such a solution.

Thanks to such a technology it is possible to build a product unquestionably having better mechanical properties in terms of prevention of delamination in addition to better reflecting the desired curved profile.

However, also the above mentioned method has some disadvantages. Indeed, according to such a known technique, the filament is not discharged along gravity on surfaces locally not orthogonal with such a direction and this may cause the filament not to lay in the desired position. Figure 3 sketches such a drawback, where gravity tends to move the filament with respect to the desired deposition point during discharging.

Paper 'Design of a customized multi-directional layered deposition system based on part geometry' by Prabhjot et al. (Proceedings of the 14th Solid Freeform Fabrication Symposium, 01-01-2003, pp. 266-278, XP005257319) discloses the preambles of claims 1 and 8. It describes, similarly to US2016067740, a 3D printer comprising a movable platform configurable for the deposition of a plurality of planar layers ('slicing') perpendicular to a building direction to build a finished product comprising a plurality of straight segments of a complex structure, each supported by the previous one (figure 4b, pg. 274).

A finished product constituted of a plurality of planar layers has a high anisotropy and this negatively impacts on mechanical properties, e.g. because each planar interface between two adjacent layers is an initiation for delamination.

Furthermore, during extrusion, the printing method provides that the platform is still such that each segment of the finished product (figure 4b, pg. 274) has a space fixed building direction.

Document DE-A1-102008027315 shows a 3D printer wherein both the platform and the head are rotatable about some axes. Planar layers are deposited and the actuation of the head, besides being used to control laser 9 in the surroundings of a fiber 13 (numerals refer to the above mentioned document), requires a certain complication of the discharger due to the moving masses and the relative inertia.

### OBJECT AND SUMMARY OF THE INVETION

Starting from such a prior art, a scope of the present invention is that of providing an alternative 3D printer and method, according to claims 1 and 8, capable of overcoming the above mentioned disadvantages.

According to the present invention, it is provided a 3D printer to build an object by superimposition of material, wherein at least one layer is curved. The curved layer includes tridimensional free surfaces, e.g. a double curvature surface, whose realization by filiform material deposition implies a continuous, coordinated and non-planar motion with respect to the plane orthogonal to the vertical direction defined by gravity. Through depositing on a non-planar surface and the continuous monitoring during the discharge of the orthogonality between the deposition surface and the vertical extrusion direction, it is possible to precisely control both the position and the integrity of the filiform material. When a non-planar layer is deposited, the monitoring is continuous and is therefore associated to the specific tridimensional geometry of the layer and of the finished product, both when it is deposited an external contour and possibly one or more internal contours of the layer and when the contour is filled to complete the layer. This is different from the slicing approach according to which just the contour is associated to the finished product and standard library functions exist to fill the area defined by a contour. Indeed, in slicing the orthogonality does not need to be monitored.

By curvilinear deposited layer it is intended a portion and/or a group of filaments deposited according to an arbitrary free tridimensional surface, e.g. having a double curvature, whose curvature change about X and Y axes is (or may be) continuous and simultaneous along the whole surface. The optimal deposition of filaments for such a surface is ensured by coordinated, continuous and simultaneous control of at least 5 axes so that the head can reach each point of the layer supposed/identified according to an alignment of the nozzle of the printing head with the normal vector to the surface.The orthogonal deposition of the filiform material according to the gravitational component and along the curved layer is specifically ensured by the coordinated and continuous control of at least two axes of rotation of the platform and simultaneously actuated during the discharge process.

The invention applies also when other materials are present, melted and/or in semi-fluid form, with or without additives and/or reinforcements, e.g. glass or carbon or Kevlar or other fibers, through a head having at least a nozzle.

In particular, the 3D printer as an apparatus comprises:
- a printing head configured to discharge material along vertical direction Z defined by gravity;
- a receiving platform for the material discharged by the printing head; wherein
- the printing head is movable with respect to the platform at least along a plane X-Y orthogonal to direction Z; and
- the platform is movable in rotation at least about the X, Y axes defining plane X-Y orthogonal to direction Z.

By platform it is intended within the present invention a receiving material base structure on which the product is freely standing and is not supported laterally or cantilevered.

Preferably, both the platform and the printing head are housed within a printing chamber being delimited and closed with respect to the external environment and accessible depending on the circumstances so that it is possible to keep monitored and/or controlled in the printing chamber specific printing conditions such as temperature, humidity, flow, pressure, viscosity, geometry and/or dimension of the filament and/or of the layer, position of the discharged material etc. The apparatus object of the invention comprises therefore a containing structure for all hardware components necessary to the printing process so as to allow the portability and/or the mobility or the simple transportation of the printer such that the latter can be easily used where needed.

The 3D printer further comprises a control unit configured to continuously coordinate relative motions of the head in the X-Y plane with respect to the platform and the rotation of the platform about X, Y axes during building of the layers. In particular, motions are controlled during both the discharge operation and the discharge preparation phase. Within the present invention, by terms 'control unit' it is intended both software integrated or connected to the 3D printer and control devices installed onboard.

The control unit is configured to control the motion of the printing head relative to the platform along the Z-direction and may possibly control the rotation of the platform about the Z-axis. The control unit receives a digital input about the image or a 3D virtual model of the product to be manufactured so that the control unit itself is capable of defining the layers required for the manufacturing of the product and, as a consequence, of continuously controlling during manufacturing of each layer the relative motion of the printing head in the X-Y plane, Z direction and the rotation of the platform about X, Y axes and possibly also about Z axis. Within the present invention, by words rotation about X, Y, and Z axes is intended both 'pure' rotation about such axes and rotation in space having components along such axes.

According to the invention, in case the control unit determines the necessity to build a curved layer, i.e. notplanar with respect to X-Y plane, the rotation of the platform about X, Y axes is controlled in such a way to continuously align the 0 direction orthogonal to the relevant deposition surface with the vertical direction Z for material discharge.

The deposition surface may be a support previously manufactured with the same apparatus, or formed or manufactured away.

In this way it is possible to build a continuous non planar layer, where the filament deposition is controlled and continuous.

The input elaboration and the layer determination is not based on subdivision of the product in a plurality of planar layers or sections orthogonal to gravity but requires an analysis as a whole of a 3D model of the product to be manufactured and the consideration of the desired mechanical properties for the finished product.

Therefore, according to the present invention, the same object can be built according to different dispositions and orientations of the filaments based on the desired mechanical properties. Such an approach guarantees both an increased flexibility and an enhanced repeatability of the result because the definition and orientation of the layers is not influenced or determined by the operator and is based on the analysis of the product's geometry and of the desired mechanical properties thereof. Oppositely, the current determination of layers, each of which is planar, is based on the orientation, generally manual, of the product as laid in the printing area. For instance, according to the invention, the determination and orientation of the layers may be generated starting from external profiles or from a preferential internal axis of the product. In such a latter case is controlled and/or determined, for instance, the propagation of possible cracks or fractures in the product.

According to the present invention, it is also possible to build braided products and this is a revolution in 3D printing.

In particular, a support form having a possibly curved profile, thus corresponding to the curved layer, is directly or indirectly arranged on the platform, so that a relevant rest for the curved layer is provided, which defines the orthogonal 0 direction according to which the platform is oriented. Such support form may be manufactured in many ways, i.e. can be a form previously manufactured away, can consist of a product previously printed by the 3D printer, or the platform may be provided with a base capable of assuming non planar profiles depending on circumstances. In this sense, the platform itself may be manufactured of a deformable material, possibly partially removable, so as to be formed at will depending on the circumstances to obtain the desired support. Alternatively, the platform may be provided by a plurality of small beams movable between a non cantilevered position from the platform and a position where each small beam cantilevers by a desired amount. Possibly, an interpolator is present to make the rest surface continuous. The support is in general manufactured in parallel and/or previously. The support may be re-used for other products having portions with the same first deposition surface.

In the case where the relative motion in the X-Y plane of the head with respect to the platform is obtained through a real motion of the head, such a motion in the plane may be realized in two ways, i.e. in Cartesian motions or in polar motions. In the latter case, the head is mounted on a slide that is fixed to a rotatable plate. As an alternative, the head translates only and the platform rotates.

A further scope of the present invention is that of using the described method and apparatus to provide printed products with new and specific properties. The possibility to discharge the printing material along the direction orthogonal to the surface on curved layers allows to better control the deposition of the material in the three dimensions, thus defining the structure of the products in the desired manner. Indeed, the product can be characterized by an orientation at will of the filaments and/or of the layers. Such freedom of material deposition goes beyond the known layer-by-layer approach and allows the manufacturing of the product structure in the most convenient way.

The invention allows to manipulate the structure of each layer and of connection and/or interconnection thereof such that the obtained structure satisfies the desired mechanical properties of the product.

The layer connection, which is only possible through surface melting of the filaments one on the other according to prior art, can now be realized through mechanical interlacing, as mentioned above.

### BRIEF DESCRIPTION OF THE DRAWINGS

Further characteristics and advantages of the present invention will become clear in the following description relating to a non limiting embodiment, with reference to the appended figures and drawings, wherein:
- figure 1 is a schematic section view of a curved profile product built through superimposition of planar layers, where also the support is built according to the same know technique;
- figure 2 is a schematic section view of a curved profile product built through superimposition of planar layers, where the support was previously built through deposition of planar layers;
- figure 3 is a schematic view of a known method for discharge of curved filiform layers;
- figure 4 is a schematic view of a step of the method for discharging of filiform curved layers according to the present invention;
- figure 5 and 6 are schematic views of 3D printers according to the present invention to build a product as shown in figure 3;
- Figure 7 is a schematic section view of a product built according to the method according to the present invention;
- figure 8 is a schematic section view of a second product built according to the method of the present invention, wherein the product has the same overall dimensions as those of the product in figure 7 but has different mechanical properties;
- figure 9 is a schematic perspective view of a braided product manufactured according to the method of the present invention;
- figure 10 is a schematic section view of a third product built according to the curved braided filament discharge method of the present invention wherein the product has the same overall dimensions as those of the products in figures 7, 8 but, obviously, different mechanical properties.

### DETAILED DESCRIPTION OF THE INVETION

In the figures a 3D printer is indicated with reference numeral 10 and, with reference numeral 1, a curved product built according to the present invention through the 3D printer.

By curved product it is intended a product built by superimposition of layers wherein at least a layer is non planar with respect to the plane orthogonal to the direction of gravity.

As shown in figures 5 and 6, the 3D printer comprises a printing head 3 configured to discharge a filiform material, for example melted plastic material, along the vertical direction Z, where in the printing head 3 is movable in a X-Y plane orthogonal to the vertical Z direction defined by gravity. According to the embodiment of figure 5, the motion of head 3 in the X-Y plane is Cartesian. However, the motion of head 3 can be of a different nature. For example, in figure 6 it is shown an embodiment wherein the motion of head 3 is polar and, in particular, rotatable about Z axis. Naturally, the 3D printer is provided with any actuator, or motor, required for obtaining such Cartesian or polar displacements.

In a dual manner to the embodiment shown in the figures, head 3 can stay still while the platform 4 moves on the X-Y plane below.

Printing head 3 is fed in a known manner by a material used for printing and of which the layer building filament is made of. In the case where the material is plastic, head 3 comprises heating means suitable for at least partially melting the plastic material. Always in a known manner, the printing head 3 may be fed by an independent channel with a different material suitable for building a support form on which layers of the product will rest.

The 3D printer therefore comprises a deposit platform 4 to receive the material discharged by printing head 3. Platform 4 is movable in rotation about X, Y axes that define X-Y plane orthogonal to Z direction. The platform shown in the figures is planar but may as well present a curved profile or be configurable according to a plurality of curved profiles depending on the circumstances. The possible provision of a head with a plurality of nozzles is not a limitation for the present invention because the rotations are performed by platform 4 and not by head 3, the latter being the most sensible component of the printer. Provided that head 3 does not rotate, the latter may also comprise cumbersome apparatuses or devices without impacting the result in terms of both quality and building time of the product.

The 3D printer also comprises a control unit 6 schematically shown in figure 5. Such control unit 6 is configured to coordinate relative motions of printing head 3 with respect to platform 4 in the X-Y plane and to the Z axis, and rotation of platform 4 about X, Y axes and possibly about Z axis during the deposition of the layers that build the product. Control unit 6 receives in particular a digital input 7, schematically shown in figure 5, which may comprise a virtual 3D model of the product to be manufactured. Based on such an input 7, control unit 6 elaborates head 3 and platform 4 motions required to build the product and verifies whether it is necessary to provide at least a curve non planar layer. Such elaboration of input 7 does not correspond, therefore, to slicing the product along parallel planes but to obtaining an image of the profile and, based on the latter and on the desired mechanical properties of the product, to deciding the layers, possibly curved, to be discharged.

The 3D printer of the present invention is therefore flexible and allows the manufacturing of products without curved layers, of products having just superimposed curved layers and of hybrid products having at least a curved layer that may also cover a plurality of planar layers underneath.

In the case where control unit 6 requires discharging of a curved non planar layer with respect to X-Y plane orthogonal to the Z gravity direction, control unit 6 is configured to control the simultaneous rotation of platform 4 about X, Y axes (and possibly Z axis) so as to continuously align the 0 direction orthogonal to the profile of the curved layer to be discharged with the material discharge vertical Z direction. Such a rotation of platform 4 is schematically shown in figure 4 where platform 4 has an α angle with respect to the vertical Z direction. As shown in figure 3, when platform 4 is horizontal, such α angle is defined between normal 0 direction and vertical Z direction to point, albeit theoretical, where the material is deposited.

Such an α rotation is controlled by suitable actuators, e.g. three pistons below platform 4 controlled by control unit 6, the pistons providing a continuous and controlled motion of each axes, or parts of axes, of the apparatus.

Preferably, both platform 4 and printing head 3 are housed inside a printing chamber delimited and closed with respect to the surrounding environment, which is accessible depending on circumstances.

Such a containing structure of hardware components as a whole of the printing process is for clarity's sake just shown schematically in figures 5 and 6 with reference numeral 50.

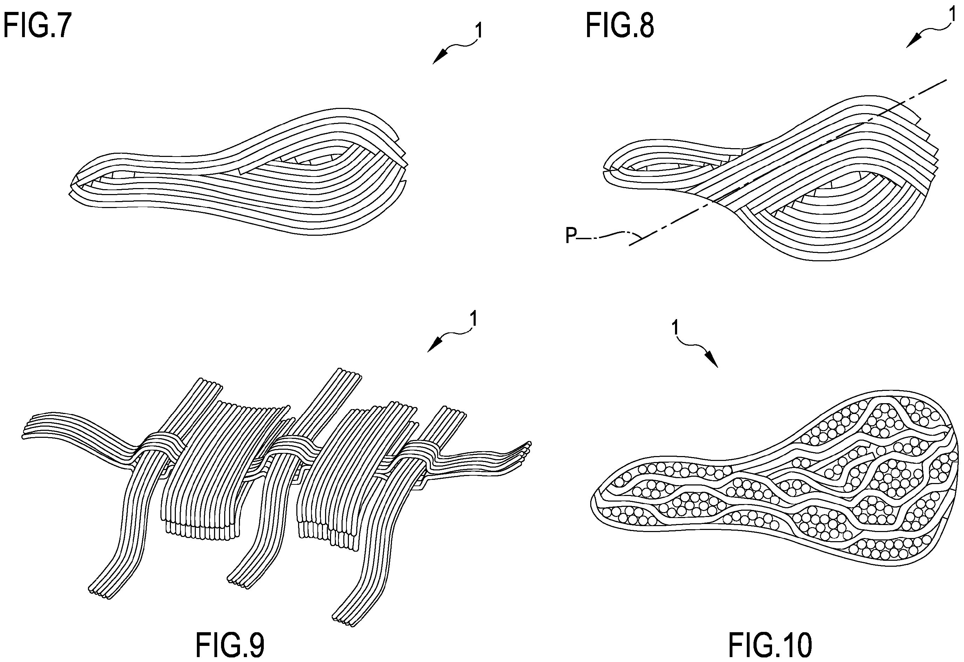

Finally, figures 7, 8 and 10 show the flexibility and the potential of the method of the present invention, which allows the manufacturing of products 1 having significant structural differences with no changes in dimensions.

The elaboration example shown in figure 7 provides the deposition of layers starting from the external superior surface and/or external inferior surface, and then compensating with curved and/or straight sections required to build final product 1.

According to the example in figure 8, the elaboration of the 3D model may start from a preferential plane P passing through product 1 to define, then, possibly curved layers required to build the product about such a plane P. Preferential plane P may be chosen to control the internal structure of product 1 to provide, for example, a preferential line for possible crack or fracture propagation.

Figure 10 in particular, as figure 9, shows the capability to build products 1 having interlaced curved filaments. Such an innovative solution is exactly made possible by discharging along the vertical and orthogonal direction to the deposition surface and by coordinated and continuous motion controlled by the control unit.

Figure 9 shows indeed an example of an interlaced product 1 built according to the method of the present invention and figure 10 shows a section view of a product 1 having deposited layers interlaced to one another.

In such figure 10, circles are the cross sections of some filaments whilst the curved sections depict longitudinal sections of other filaments.

From an analysis of figures 7, 8 and 10, it is possible to note that the method of the present invention allows the production of products 1 having similar dimensions and curved profiles according to a plurality of variants to better provide finished product 1 with the desired mechanical properties. Each of such solutions is indeed obtained thanks to the deposition of the material along gravity and along the direction orthogonal to the surface. Furthermore, the method of the present invention allows to discharge overmaterial where necessary, e.g. in an interstice and/or in the end portions of the deposited layers to improve the mechanical and/or aesthetic properties of the manufactured product.

The work on which the present invention is based was funded by the European Union (Seventh Framework Programme FP7/2007-2013 under grant agreement n° 609386).

It is evident that it is possible to apply modifications and variations to the 3D printer described herein without departing from the scope of protection as defined by the attached claims. In particular, referring to the vertical direction of gravity and to the direction orthogonal to the deposition surface, it is intended to fall within such a definition also a directrix within 10° from the theoretical direction.
According to an alternative embodiment of the present invention, it is possible to provide a step of complete or partial detection of the deposition surface, e.g. via a proximity sensor, a 3D scanner or other sensor on board of 3D printer 10, preferably carried by printing head 3. Data from such a detection step are elaborated by control unit 6 to control the rotation of platform 4 and/or of printing head 3. For instance, the deposition surface is pre-defined, e.g. is stored in control unit 6 before starting the working cycle thereof, and the detection performed by the sensor during functioning, e.g. when the deposition surface is defined by layers previously deposited by printing head 3, is compared by the control unit with the pre-defined data to identify possible mismatches and consequently drive extrusion head 3 and/or platform 4.

## Claims

1. A method for 3D printing a product (1) by means of consecutive deposition of a filiform material (2) wherein at least one layer is a non-planar layer with respect to a plane (X-Y) that is orthogonal to the vertical direction (Z) defined by the force of gravity; said method comprising the steps of:
a) providing:
- a printing head (3) configured to discharge the filiform material (2) along the vertical direction (Z);
- a platform for receiving (4) the filiform material (2) discharged by the printing head (3);
- a supporting form (5) arranged directly or indirectly on the platform (4) and having a deposition surface on top of which the filiform material (2) is deposited;
wherein the printing head (3) is relatively movable with respect to the platform (4) in a plane (X-Y) orthogonal to the vertical direction (Z) and the platform (4) is rotatable about the axes (X, Y) that define the plane (X-Y) orthogonal to the direction (Z);
b) continuous controlling the relative motion of the printing head (3) in the plane (X-Y) and the rotation of the platform (4) about the axes (X,Y) during the discharging of the filiform material (2);
wherein the deposition surface is non planar with respect to the plane (X-Y), **characterized in that** the step of controlling the rotation of the platform (4) about the axes (X, Y) comprises the step of controlling the rotation of the platform (4) simultaneously about the axes (X, Y) in such a way as to continuously align the vertical direction (Z) of material discharge, defined by an axis of a nozzle of the printing head (3), with an orthogonal direction (O) of the surface on which the filiform material (2) is deposited during the deposition of the layer on the supporting form (5) so as to obtain a non-planar layer with tridimensional geometry having curvature changes about said axes (X-Y) or a braided structure consisting of curved interlaced discharged filiform material with tridimensional geometry having curvature changes about said axes (X-Y).

2. Method according to claim 1, comprising the step of detecting the deposition surface via a sensor to obtain a partial or complete survey and the step of controlling the rotation of the platform (4) and/or the position of the printing head (3) based on such a survey.

3. Method according to any of the preceding claims, wherein the deposition surface is curved so that the non-planar layer deposited on said deposition surface, due to said continuous controlling, is associated to a specific tridimensional geometry of said layer and of the finished product, both when it is deposited an external contour and one or more internal contours of said layer and when the contour is filled to complete said layer.

4. Method according to any of the preceding claims, wherein the printing head (3) is not rotatable about axes comprised in said plane (X-Y).

5. Method according to any of the preceding claims, wherein the step of controlling the rotation is such that the filiform material is discharged during a relative motion along the vertical direction of the printing head (3) with respect to the platform (4) and a motion of the printing head (3) in the plane (X-Y).

6. Method as claimed in any of the preceding claims, wherein the step of continuous motion controlling the printing head (3) in the plane (X-Y) during the discharging of the filiform material (2) comprises the step of controlling the polar displacement of the printing head (3) in the plane (X-Y)

7. Method as claimed in claim 6, wherein the polar displacement is carried out by controlling the displacement of the printing head (3) along an axis in the plane (X-Y) and the rotation of the platform (4) about the (Z) axis

8. A 3D printer (10) for building a product by means of consecutive deposition of a filiform material (2) where at least one layer is a non-planar layer with respect to a plane (X-Y) that is orthogonal to the vertical direction (Z) defined by the force of gravity; The printer comprising:
- a printing head (3) configured to discharge the filiform material (2) along the vertical direction (Z);
- a platform for receiving (4) the filiform material (2) discharged by the printing head (3);
- a supporting form (5) arranged directly or indirectly on the platform (4) and having a deposition surface on top of which the filiform material (2) is deposited;
wherein the printing head (3) is relatively movable with respect to the platform (4) in a plane (X-Y) orthogonal to the vertical direction (Z) and the platform (4) is rotatable about the axes (X, Y) that define the plane (X-Y) orthogonal to the direction (Z);
- a control unit (6) configured to control the relative motion of the printing head (3) in the plane (X-Y) and the rotation of the platform (4) about the axes (X,Y) during the discharging of the filiform material (2);
and the deposition surface is non planar with respect to the plane (X-Y), **characterised in that** the control unit (6) is configured to control the rotation of the platform (4) simultaneously about the axes (X, Y) in such a way as to continuously align the vertical direction (Z) of material discharge, defined by an axis of a nozzle of the printing head (3), with an orthogonal direction (O) of the surface on which the filiform material (2) is deposited during the deposition of the layer on the supporting form (5) so as to obtain a non-planar layer with a tridimensional geometry having curvature changes about said axes (X-Y) or a braided structure consisting of curved interlaced discharged filiform material with tridimensional geometry having curvature changes about said axes (X-Y).

9. 3D printer as claimed in claim 8, comprising a sensor to obtain a partial or complete survey of the deposition surface and wherein the control unit (6) is configured to control the rotation of the platform (4) and/or the position of the printing head (3) based on such a survey.

10. 3D printer according to any of claims 8 or 9, **characterized in that** the deposition surface is curved so that the non-planar layer deposited on said deposition surface, due to said continuous controlling, is associated to a specific tridimensional geometry of said layer and of the finished product, both when it is deposited an external contour and one or more internal contours of said layer and when the contour is filled to complete said layer.

11. 3D printer according to any of claims from 8 to 10, **characterized in that** the printing head (3) is not rotatable about axes comprised in said plane (X-Y).

12. 3D printer according to any of claims from 8 to 11, wherein the control unit (6) is configured to control the rotation so as the filiform material is discharged during a relative motion along the vertical direction of the printing head (3) with respect to the platform (4) and a motion of the printing head (3) in the plane (X-Y).

13. 3D printer as claimed in any of claims from 8 to 12, wherein the printing head (3) is configured to perform a polar displacement in the plane (X-Y).

14. 3D printer as claimed in claim 13, wherein the polar displacement is carried out by controlling the displacement of the printing head (3) along an axis in the plane (X-Y) and the rotation of the platform (4) about the (Z) axis.

## Patentansprüche

1. Verfahren zum 3D-Drucken eines Produktes (1) mittels aufeinanderfolgender Abscheidung eines fadenförmigen Materials (2), wobei mindestens eine Schicht nicht planar in Bezug auf eine Ebene (X-Y) ist, orthogonal zur vertikalen Richtung (Z) die durch die Schwerkraft definiert ist; wobei das Verfahren die folgenden Schritte umfasst:
a) Bereitstellen von:
- einem Druckkopf (3), der so konfiguriert ist, dass er das fadenförmige Material (2) entlang der vertikalen Richtung (Z) ausgibt;
- einer Plattform (4) zur Aufnahme des vom Druckkopf (3) ausgegebenen fadenförmigen Materials (2);
- einer Stützform (5), die direkt oder indirekt auf der Plattform (4) angeordnet ist und eine Ablagefläche aufweist, darüber das fadenförmige Material (2) abgelegt wird;
wobei der Druckkopf (3) relativ zur Plattform (4) in einer Ebene (X-Y) orthogonal zur vertikalen Richtung (Z) beweglich ist und die Plattform (4) um die Achsen (X, Y) drehbar ist, die die Ebene (X-Y) orthogonal zur Richtung (Z) definieren;
b) kontinuierliche Steuerung der Relativbewegung des Druckkopfes (3) in der Ebene (X-Y) und der Drehung der Plattform (4) um die Achsen (X,Y) während des Ausgebens des fadenförmigen Materials (2);
wobei die Ablagefläche in Bezug auf die Ebene (X-Y) nicht planar ist, **dadurch gekennzeichnet, dass** der Schritt des Steuerns der Drehung der Plattform (4) um die Achsen (X, Y) den Schritt des Steuerns der Drehung der Plattform (4) umfasst, der gleichzeitig um die Achsen (X, Y) in einer solchen Weise erfolgt, dass die vertikale Richtung (Z) der Materialausgebens, die durch eine Achse einer Düse des Druckkopfes (3) definiert wird, kontinuierlich mit einer orthogonalen Richtung (0) der Oberfläche ausgerichtet wird, auf der das fadenförmige Material (2) während der Ablagerung der Schicht auf der Trägerform (5) abgelagert wird, um eine nicht planare Schicht mit dreidimensionaler Geometrie mit Krümmungsänderungen um die Achsen (X-Y) oder eine geflochtene Struktur zu erhalten, die aus gebogenem, verflochtenem, entladenem fadenförmigem Material mit dreidimensionaler Geometrie und Krümmungsänderungen um die Achsen (X-Y) besteht.

2. Verfahren nach Anspruch 1, umfassend den Schritt des Erkennens der Ablagefläche durch einen Sensor, um eine teilweise oder vollständige Vermessung zu erhalten, und den Schritt des Steuerns der Drehung der Plattform (4) und/oder der Position des Druckkopfes (3) auf der Grundlage zu einer solchen Vermessung.

3. Verfahren nach einem der vorhergehenden Ansprüche, wobei die Ablagefläche ist gekrümmt, so dass die auf der Ablagefläche nicht planare abgeschiedene Schicht aufgrund der kontinuierlichen Steuerung einer spezifischen dreidimensionalen Geometrie der Schicht und des fertigen Produkts zugeordnet wird, sowohl wenn eine Außenkontur als auch ein oder mehrere Innenkonturen der Schicht abgeschieden sind und wenn die Kontur gefüllt ist, um die Schicht zu vervollständigen.

4. Verfahren nach einem der vorhergehenden Ansprüche, wobei der Druckkopf (3) nicht um Achsen drehbar ist, die in der Ebene (X-Y) liegen.

5. Verfahren nach einem der vorhergehenden Ansprüche, wobei der Schritt des Steuerns der Drehung derart erfolgt, dass das fadenförmige Material während einer Relativbewegung entlang der vertikalen Richtung des Druckkopfes (3) in Bezug auf die Plattform (4) und einer Bewegung des Druckkopfes (3) in der Ebene (X-Y), abgegeben wird.

6. Verfahren nach einem der vorhergehenden Ansprüche, wobei der Schritt der kontinuierlichen Steuerung der Bewegung des Druckkopfes (3) in der Ebene (X-Y) während des Ausgebens des fadenförmigen Materials (2) den Schritt der Steuerung der Polarverschiebung des Druckkopfes (3) in der Ebene (X-Y) umfasst.

7. Verfahren nach Anspruch 6, wobei die Polarverschiebung durch Steuern der Verschiebung des Druckkopfes (3) entlang einer Achse in der Ebene (X-Y) und der Drehung der Plattform (4) um die Achse (Z) durchgeführt wird.

8. 3D-Drucker (10) zum Bilden eines Produkts durch aufeinanderfolgendes Aufbringen eines fadenförmigen Materials (2), wobei mindestens eine Schicht eine nicht planare Schicht in Bezug auf eine Ebene (X-Y) ist, die orthogonal zur vertikalen Richtung (Z) und durch die Schwerkraft definiert ist; wobei der Drucker besteht aus:
- einem Druckkopf (3), der so konfiguriert ist, dass er das fadenförmige Material (2) entlang der vertikalen Richtung (Z) ausgibt;
- einer Plattform (4) zur Aufnahme des vom Druckkopf (3) ausgegebenen fadenförmigen Materials (2);
- einer Stützform (5), die direkt oder indirekt auf der Plattform (4) angeordnet ist und eine Ablagefläche aufweist, auf deren Oberseite das fadenförmige Material (2) abgelegt wird;
wobei der Druckkopf (3) relativ zur Plattform (4) in einer Ebene (X-Y) orthogonal zur vertikalen Richtung (Z) beweglich ist und die Plattform (4) um die Achsen (X, Y) drehbar ist, die die Ebene (X-Y) orthogonal zur Richtung (Z) definieren;
- einer Steuereinheit (6), die so konfiguriert ist, dass sie die relative Bewegung des Druckkopfs (3) in der Ebene (X-Y) und die Drehung der Plattform (4) um die Achsen (X, Y) während des Ausgebens des fadenförmigen Materials (2) steuert;
und wobei die Ablagefläche in Bezug auf die Ebene (X-Y) nicht planar ist, **dadurch gekennzeichnet, dass** die Steuereinheit (6) so konfiguriert ist, dass sie die Drehung der Plattform (4) gleichzeitig um die Achsen (X, Y) so steuert, dass sie sich kontinuierlich entlang der vertikalen Richtung (Z) des Materialausgebens, die durch eine Achse einer Düse des Druckkopfes (3) mit einer orthogonalen Richtung (0) der Oberfläche definiert ist, auf der das fadenförmige Material (2) während der Abscheidung der Schicht auf die Stützform (5) abgelegt wird, so dass eine nicht planare Schicht mit dreidimensionaler Geometrie mit Krümmungsänderungen um die Achsen (X-Y) oder eine geflochtene Struktur erhalten wird, die aus gebogenem, verflochtenem, entladenem fadenförmigem Material mit dreidimensionaler Geometrie und mit Krümmungsänderungen um die Achsen (X-Y) besteht.

9. 3D-Drucker nach Anspruch 8, umfassend einen Sensor, um eine teilweise oder vollständige Vermessung über die Ablagefläche zu erhalten, und wobei die Steuereinheit (6) so konfiguriert ist, dass sie die Drehung der Plattform (4) und/oder die Position des Druckkopfes (3) basierend auf einer solchen Vermessung steuert.

10. 3D-Drucker nach einem der Ansprüche 8 oder 9, **dadurch gekennzeichnet, dass** die Ablagefläche gekrümmt ist, so dass die nicht planare Schicht, die auf der Ablagefläche abgeschieden wird, aufgrund der kontinuierlichen Steuerung, einer spezifischen dreidimensionalen Geometrie der Schicht und des fertigen Produkts zugeordnet wird, sowohl wenn es auf einer Außenkontur als auch auf einer oder mehreren Innenkonturen abgeschieden wird und wenn die Kontur gefüllt ist, um die Schicht zu vervollständigen.

11. 3D-Drucker nach einem der Ansprüche 8 bis 10, **dadurch gekennzeichnet, dass** der Druckkopf (3) nicht um Achsen drehbar ist, die in der Ebene (X-Y) liegen.

12. 3D-Drucker nach einem der Ansprüche 8 bis 11, wobei die Steuereinheit (6) so konfiguriert ist, dass sie die Drehung so steuert, dass das fadenförmige Material während einer Relativbewegung entlang der vertikalen Richtung des Druckkopfes (3) in Bezug auf der Plattform (4) abgegeben wird, und einer Bewegung des Druckkopfes (3) in der Ebene (X-Y).

13. 3D-Drucker nach einem der Ansprüche 8 bis 12, wobei der Druckkopf (3) so konfiguriert ist, dass er eine Polarverschiebung in der Ebene (X-Y) durchführt.

14. 3D-Drucker nach Anspruch 13, wobei die Polarverschiebung durch eine Steuerung der Verschiebung des Druckkopfes (3) entlang einer Achse in der Ebene (X-Y), und durch eine Drehung der Plattform (4) um die Achse (Z) erfolgt.

## Revendications

1. Procédé d'impression 3D d'un produit (1) au moyen du dépôt consécutif d'un matériau filiforme (2), dans lequel au moins une couche est une couche non plane par rapport à un plan (X-Y) qui est orthogonal à la direction verticale (Z) définie par la force de gravité; ledit procédé comprenant les étapes suivantes:
a) fournir:
- une tête d'impression (3) configurée pour décharger le matériau filiforme (2) le long de la direction verticale (Z);
- une plateforme de réception (4) du matériau filiforme (2) déchargé par la tête d'impression (3) ;
- une forme de support (5) disposée directement ou indirectement sur la plateforme (4) et présentant une surface de dépôt sur laquelle est déposé le matériau filiforme (2);
dans lequel la tête d'impression (3) est relativement mobile par rapport à la plateforme (4) dans un plan (X-Y) orthogonal à la direction verticale (Z) et la plateforme (4) peut tourner autour des axes (X, Y) qui définissent le plan (X-Y) orthogonal à la direction (Z) ;
b) contrôler en continu le mouvement relatif de la tête d'impression (3) dans le plan (X-Y) et la rotation de la plateforme (4) autour des axes (X, Y) pendant la décharge du matériau filiforme (2);
dans lequel la surface de dépôt est non plane par rapport au plan (X-Y), **caractérisé en ce que**
l'étape de contrôle de la rotation de la plateforme (4) autour des axes (X, Y) comprend l'étape de contrôle de la rotation de la plateforme (4) simultanément autour des axes (X, Y) de manière à aligner continûment la direction verticale (Z) de décharge du matériau, définie par un axe d'une buse de la tête d'impression (3), avec une direction orthogonale (0) de la surface sur laquelle le matériau filiforme (2) est déposé lors du dépôt de la couche sur la forme de support (5), de telle sorte qu'une couche non plane est obtenue avec une forme géométrique tridimensionnelle, avec des changements de courbure autour desdits axes (X-Y) ou une structure de tresse consistant en un matériau filiforme courbé, entrelacé et déchargé avec une forme géométrique tridimensionnelle, ayant des changements de courbure autour desdits axes (X-Y).

2. Procédé selon la revendication 1, comprenant l'étape de détection de la surface de dépôt par un capteur pour obtenir un relevé partiel ou complet et l'étape de contrôle de la rotation de la plateforme (4) et/ou de la position de la tête d'impression (3) en fonction d'un tel relevé.

3. Procédé selon l'une quelconque des revendications précédentes, dans lequel la surface de dépôt est courbée, de telle sorte que la couche non plane déposée sur ladite surface de dépôt, par ledit contrôle continu, est associée à une spécifique forme géométrique tridimensionnelle de ladite couche et du produit fini, soit quand un profil extérieur et un ou plusieurs profils intérieurs de ladite couche sont déposés, soit quand le profil est rempli pour compléter la couche.

4. Procédé selon l'une quelconque des revendications précédentes, dans lequel la tête d'impression (3) ne peut pas tourner autour d'axes compris dans ledit plan (X-Y).

5. Procédé selon l'une quelconque des revendications précédentes, dans lequel l'étape de contrôle de la rotation est telle que le matériau filiforme est déchargé lors d'un mouvement relatif le long de la direction verticale de la tête d'impression (3) par rapport à la plateforme (4) et d'un mouvement de la tête d'impression (3) dans le plan (X-Y).

6. Procédé selon l'une quelconque des revendications précédentes, dans lequel l'étape consistant à contrôler le mouvement continu de la tête d'impression (3) dans le plan (X-Y) pendant la décharge du matériau filiforme (2) comprend l'étape consistant à contrôler le déplacement polaire de la tête d'impression (3) dans le plan (X-Y)

7. Procédé selon la revendication 6, dans lequel le déplacement polaire est effectué en contrôlant le déplacement de la tête d'impression (3) le long d'un axe dans le plan (X-Y) et la rotation de la plateforme (4) autour de l'axe (Z).

8. Imprimante 3D (10) pour former un produit au moyen du dépôt consécutif d'un matériau filiforme (2), où au moins une couche est une couche non plane par rapport à un plan (X-Y) orthogonal à la direction verticale (Z) défini par la force de gravité; l'imprimante comprenant :
- une tête d'impression (3) configurée pour décharger le matériau filiforme (2) le long de la direction verticale (Z);
- une plateforme de réception (4) du matériau filiforme (2) déchargé par la tête d'impression (3);
- une forme de support (5) disposée directement ou indirectement sur la plateforme (4) et avec une surface de dépôt au dessus de laquelle est déposé le matériau filiforme (2);
dans lequel la tête d'impression (3) est relativement mobile par rapport à la plateforme (4) dans un plan (X-Y) orthogonal à la direction verticale (Z) et la plateforme (4) peut tourner autour des axes (X, Y) qui définissent le plan (X-Y) orthogonal à la direction (Z) ;
- une unité de contrôle (6) configurée pour contrôler le mouvement relatif de la tête d'impression (3) dans le plan (X-Y) et la rotation de la plateforme (4) autour des axes (X, Y) pendant la décharge du matériau filiforme (2);
et la surface de dépôt n'étant pas plane par rapport au plan (X-Y), **caractérisé en ce que** l'unité de contrôle (6) est configurée pour contrôler la rotation de la plateforme (4) simultanément autour des axes (X, Y) de manière à aligner en continu la direction verticale (Z) de décharge du matériau, définie par un axe d'une buse de la tête d'impression (3), avec une direction orthogonale (0) de la surface sur laquelle le matériau filiforme (2) est déposé lors du dépôt de la couche sur la forme de support (5), de telle sorte qu'une couche non plane avec une forme géométrique tridimensionnelle est obtenue, avec de changements de courbure des dits axes (X-Y), ou une structure en tresse consistant en un matériau filiforme, courbé, entrelacé er déchargé avec une forme géométrique tridimensionnelle avec des changements de courbure autour des dits axes (X-Y).

9. Imprimante 3D selon la revendication 8, comprenant un capteur pour obtenir un relevé partiel ou complet de la surface de dépôt et dans laquelle l'unité de contrôle (6) est configurée pour contrôler la rotation de la plateforme (4) et/ou la position de la tête d'impression (3) basée sur un tel relevé.

10. Imprimante 3D selon l'une des revendications 8 ou 9, **caractérisée en ce que** la surface de dépôt est courbe, de telle sorte que la couche non plane déposée sur ladite surface de déposition, en conséquence d'un tel contrôle continu, est associée à une particulière forme géométrique de ladite couche et du produit fini, dépose un profil extérieur et un ou plusieurs profils intérieurs de ladite couche, et lorsque le profil est rempli pour compléter ladite couche.

11. Imprimante 3D selon l'une quelconque des revendications 8 à 10, **caractérisée en ce que** la tête d'impression (3) ne peut pas tourner autour d'axes compris dans ledit plan (X-Y).

12. Imprimante 3D selon l'une quelconque des revendications 8 à 11, dans laquelle l'unité de contrôle (6) est configurée pour contrôler la rotation de sorte que le matériau filiforme soit déchargé pendant un mouvement relatif le long de la direction verticale de la tête d'impression (3) par rapport à la plateforme (4) et avec un mouvement de la tête d'impression (3) dans le plan (X-Y).

13. Imprimante 3D selon l'une quelconque des revendications 8 à 12, dans laquelle la tête d'impression (3) est configurée pour effectuer un déplacement polaire dans le plan (X-Y).

14. Imprimante 3D selon la revendication 13, dans laquelle le déplacement polaire est effectué en contrôlant le déplacement de la tête d'impression (3) le long d'un axe dans le plan (X-Y) et la rotation de la plateforme (4) autour de l'axe (Z).
